Europäisches Patentamt

European Patent Office

Office européen des brevets

(11) Veröffentlichungsnummer: **0 408 148 A1**

## (12) EUROPÄISCHE PATENTANMELDUNG

(21) Anmeldenummer: 90201880.3

(22) Anmeldetag: **10.07.90**

(51) Int. Cl.⁵: **G01F 1/66**

(30) Priorität: **10.07.89 NL 8901763**

(43) Veröffentlichungstag der Anmeldung:
**16.01.91 Patentblatt 91/03**

(84) Benannte Vertragsstaaten:
**CH DE FR LI NL**

(71) Anmelder: **ALTOMETER, PRODUKTIEBEDRIJF VAN RHEOMETRON A.G.**
**Krausstraat 14/18**
**NL-3364 AD Sliedrecht(NL)**

(72) Erfinder: **Boer, Adriaan Hendrik**
**Baaneweer 36**
**NL-3363 XB Sliedrecht(NL)**
Erfinder: **Peters, Petrus Marina Adrianus**
**Potgieterstraat 10**
**NL-3351 ET Papendrecht(NL)**

(74) Vertreter: **de Bruijn, Leendert C. et al**
**Nederlandsch Octrooibureau**
**Scheveningseweg 82 P.O. Box 29720**
**NL-2502 LS 's-Gravenhage(NL)**

(54) **Auflagerungsvorrichtung für einen richtungsempfindlichen Sensor, damit ausgestattetes Messsystem sowie Verfahren zur Ausrichtung eines solchen Messsystems.**

(57) Eine Auflagerungsvorrichtung für einen richtungsempfindlichen Sensor ist versehen mit einem fest aufstellbaren Gehäuse daß um wenigstens zwei gegenseitig senkrechte Drehlinien drehbar ist, die im wesentlichen quer zu der Richtung verlaufen, in der der Sensor empfindlich ist. Der Auflagerungsvorrichtung weist auch ein Aufnahme-Organ mit einer durchgehenden zylindrischen Bohrung auf, in der eine äußerlich entsprechende zylindrische Halterung für den Sensor zentriert werden kann. Die zylindrische Bohrung in dem Aufnahme-Organ mündet an jedenfalls einem Ende auf eine Anschlagsfläche, und die Halterung weist einen außerlichen Flansch mit einer Gegenfläche auf die gegen jene Anschlagsfläche angebracht werden kann.

fig-4

## AUFLAGERUNGSVORRICHTUNG FÜR EINEN RICHTUNGSEMPFINDLICHEN SENSOR, DAMIT AUSGESTATTETES MESSSYSTEM SOWIE VERFAHREN ZUR AUSRICHTUNG EINES SOLCHEN MESSSYSTEMS.

Die vorliegende Erfindung betrifft eine Auflagerungsvorrichtung für einen richtungsempfindlichen Sensor, versehen mit einem fest aufstellbaren Gehäuse mit Aufnahme-Organ für den Sensor.

Eine solche Auflagerungsvorrichtung ist bekannt. Sie muß eine stabile Auflagerung für den Sensor gewährleisten, dessen Wirkung stark von einer richtigen, konstanten Position und Ausrichtung gegenüber der zu messenden Materie, wie einer Flüssigkeitsströmung, abhängig ist. Für die Messung einer Strömung in einem Rohr oder Kanal mittels beispielsweise akustischer, mit Sende- und Empfangskomponenten versehener Sensoren, müssen zwei solcher Sensoren gegenseitig ausgerichtet auf beiden Seiten des Rohrs oder des Kanals angebracht werden. Die gemeinsame Achsenlinie muß dabei unter einem vom 90°- Winkel abweichenden Winkel gegeninber der Strömungsrichtung verlaufen.

Bekannt ist nun, jedes zu einem Sensor gehörendes Gehäuse an der Außenseite des Rohrs oder Kanals festzuschweißen. Bei diesem Festschweißen müssen die Gehäuse gleichzeitig korrekt ausgerichtet werden, was mittels eines stabförmigen Kalibrierinstruments erfolgt. Durch Löcher in dem Rohr kann die Flüssigkeitsströmung gemessen werden.

Eine solche bekannte Vorrichtung zur Messung von Flüssigkeitsströmungsgeschwindigkeiten weist eine Reihe von Beschränkungen auf. Zunächst ist es schwierig, die Gehäuse gegenseitig gut auszurichten. Es ist bekannt, daß wahrend des Schweißvorgangs die zu verschweißenden Teile gegenseitige Verformungen aufweisen können, wodurch die Ausrichtung verloren geht. Nachrichten ist meistens nicht mehr möglich. Weiter darf der gegenseitige Abstand der Sensoren nicht allzu groß sein, weil das für deren Ausrichtung erforderliche Kalibrierinstrument wegen der erforderlichen Genauigkeit der Ausrichtung nicht zu lang sein darf. Dadurch kann die Vorrichtung nur erfolgreich bei Rohren oder Kanälen mit nicht zu großen Querschnitt angewandt werden. Anwendung bei einem Betonkanal beispielsweise wird durch Befestigungsprobleme und -ungenauigkeiten erschwert.

Zweck der Erfindung ist es deshalb, eine Auflagerungsvorrichtung der eingangs genannten Art zu verschaffen, die diese Beschränkungen nicht aufweist. Dieser Zweck wird dadurch erreicht, daß das Aufnahme- Organ um wenigstens zwei gegenseitig senkrechte Drehlinien drehbar ist, die im wesentlichen quer zu der Richtung verlaufen, in der der Sensor empfindlich ist, und daß ein Sperrmittel dazu vorgesehen ist, um das Aufnahme-Organ in einer gewünschten Drehposition zu sperren.

Bei der erfindungsgemäßen Auflagerungsvorrichtung kann das Gehäuse nunmehr global in der richtigen Position befestigt werden, während danach das Aufnahme-Organ verdreht werden kann. Dank der Möglichkeit der Verdrehung um die beiden Drehlinien, kann jede gewünschte Position eingestellt werden. Da die Handlungen für die Befestigung und die Einstellung nunmehr gesondert ausgeführt werden können, ist eine genauere und zuverlässigere Einstellung gewährleistet.

Die Einstellmöglichkeit um zwei gegenseitig senkrecht verlaufende Drehlinien kann in unterschiedlicher Weise realisiert werden. Nach einer Vorzugsausführungsform ist jedoch vorgesehen, daß das Gehäuse einen durchgehenden Hohlraum aufweist und daß ein Ende des Hohlraums nach einem Teil einer Kugelfläche sich erweiternd verläuft, und daß ein Aufnahme-Organ vorgesehen ist, das einen äußeren, entsprechend einer gleichen Kugelfläche verlaufenden Teil aufweist, wobei beide kugelflächenförmige Teile ineinander passend verdrehbar miteinander zusammenwirken. Eine solche Ausführungs form bietet die gewünschten Verdrehungsmöglichkeiten und ist darüber hinaus kompakt und stabil.

Die erforderliche Sperrung des Aufnahme-Organs in der gewünschten Position wird realisiert, indem das Sperrmittel ein Andrückorgan ist, mit dem die Kugelflächen aufeinander zu gedrängt werden können, in der Weise, daß sie durch gegenseitige Reibung gegenseitig sperrbar sind. Eine sehr stabile Befestigung des Sensors kann bewirkt werden, indem das Aufnahme-Organ eine durchgehende zylindrische Bohrung aufweist, in der eine äußerlich entsprechende zylindrische Halterung für den Sensor zentriert werden kann.

Die korrekte Position des Sensors in dem Gehäuse kann weiter festgehalten werden, indem die zylindrische Bohrung in dem Aufnahme-Organ an jedenfalls einem Ende auf eine Anschlagsfläche mündet, und daß die Halterung einen außerlichen Flansch mit einer Gegenfläche aufweist, die gegen jene Anschlagsfläche angebracht werden kann. Wenn dabei vorgesehen ist, daß die Gegenfläche zum auf ein zu messendes Medium oder einen zu messenden Gegenstand gerichteten Ende des Gehäuses hin gewendet ist, und die Anschlagsfläche diesem Ende abgewendet ist, dann kann das Aufnahme-Organ an der diesem Medium oder Gegenstand abgewandte Seite des Gehäuses eingesetzt werden. Wenn dagegen jedoch vorgesehen ist, daß diese Gegenfläche dem Ende des Gehäuses abgewandt ist, das auf ein zu messendes Medium oder einen zu messenden Gegenstand gerichtet ist, so kann das Aufnahme-Organ gerade an der diesem Medium oder Gegenstand zugewandten Seite eingesetzt werden. Das ist ein Vorteil, wenn das Gehäuse in einer Nische in einem großen Betonkanal befestigt ist, und das Gehäuse folglich lediglich vom inneren Raum des Kanals aus erreichbar ist.

Wie bereits gesagt, kann die Halterung in der gewünschten Position mittels eines Andrück-Organs gesperrt werden. Die Sperrwirkung kann dabei noch weiter verstärkt werden, indem das Androckorgan ein Ring ist, der mit einem innen gemäß der Kugelfläche des Aufnahme-Organs verlaufenden Teil zusammenwirkt, wobei das Aufnahmeorgan zwischen dem Gehäuse und diesem Ring festgehalten wird, und dieser Ring mittels Schrauben an dem Gehäuse befestigt werden kann, in der Weise, daß bei Festziehen der Schrauben das Aufnahme-Organ durch die dabei die zusammenarbeitenden kugelflächenförmigen Oberflächen beaufschlagende Reibung festgeklemmt werden. Wenn dabei vorgesehen ist, daß Gehäuse und Ring jedenfalls drei Paar, pro Paar auf eine Linie fluchtend zu bringende Löcher aufweist, wobei der Schraubenschaft in den Löchern im Gehäuse geschraubt werden kann und der Schraubenkopf an der dem Gehäuse abgewandten Seite des Rings angebracht werden kann, kann das Aufnahme-Organ gesperrt werden, indem die Schrauben an der dem zu messenden Medium oder Gegenstand abgewandten Seite der Auflagerungsvorrichtung festgezogen werden.

Wenn jedoch Gehäuse und Ring jedenfalls drei Paar, pro Paar auf eine Linie fluchtend zu bringende Löcher aufweist, wobei der Schraubenschaft in den Löcher im Ring geschraubt werden kann und der Schraubenkopf dichtend an einer dem Ring abgewandten Auflagerungsfläche am Gehäuse angebracht werden kann, so kann die Sperrhandlung auf der dem Medium oder Gegenstand zugewandten Seite der Auflagerungsvorrichtung vorgenommen werden. Dies bedeutet, daß die Auflagerungsvorrichtung somit vollständig von dem inneren Raum des Kanals aus eingestellt werden kann, und daß auch von diesem Raum aus dabei das Aufnahme-Organ mit dem Sensor in der vorstehend beschriebenen Weise angeordnet werden kann.

Die Auflagerungsvorrichtung wird vorzugsweise zur Messung eines Flüssigkeitsstroms eingesetzt. Dabei muß sie wasserdicht sein, was bewirkt werden kann, indem in einem der kugelflächenförmigen Teile des Gehäuses und Aufnahme- Organs eine flexible Dichtung vorgesehen ist.

Die Erfindung betrifft ebenfalls ein System zur Messung der Geschwindigkeit einer Flüssigkeitsströmung, versehen mit zwei gegenseitig ausgerichteten Auflagerungsvorrichtungen nach einem der vorigen Ansprüche, jeweils versehen mit einem akustischen Sensor. Wenn dieses System zur Messung einer Flüssigkeitsströmung in einem Kanal angewandt wird, ist vorgesehen, daß die Auflagerungsvorrichtungen jeweils auf einer Seite einer Abdeckplatte befestigt sind, welche Abdeckplatte mit einem Loch für den Sensor versehen ist, zwei einander gegenüber gelegene Seiten des Kanals mit inneren Sparungen in Größe der entsprechenden Abdeckplatten versehen sind, welche Aussparungen in der Längsrichtung des Kanals gegenseitig versetzt sind, und wobei die Abdeckplatten dichtend auf den Rand der Sparungen festgesetzt werden können, in der Weise, daß sich jede Auflagerungsvorrichtung in einer inneren Aussparung erstreckt.

Ein solches System kann mittels eines Verfahrens ausgerichtet werden, bei dem eine Laserquelle oder eine akustische Quelle in der einen Auflagerungsvorrichtung zentriert wird, deren Aufnahme-Organ mittels des Lasersignals beziehungsweise des Schallsignals auf die andere Auflagerungsvorrichtung gezielt wird und daraufhin dieses Aufnahme-Organ in der betreffenden Position fixiert wird, wonach die Laser- oder Schallquelle entfernt wird und in der anderen Auflagerungsvorrichtung zentriert wird, deren Aufnahme-Organ mittels des Laser- oder Schallsignals auf die gegenüberliegende Auflagerungsvorrichtung gezielt wird und daraufhin dieses Aufnahme-Organ fixiert wird. Wenn eine Schallquelle angewandt wird, kann die Ausrichtung unter Betriebsbedingungen erfolgen.

Nachstehend wird die Erfindung anhand einiger Ausführungsbeispiele erläutert:

Figur 1 zeigt einen Kanal, in dem zwei erfindungsgemäße Auflagerungsvorrichtungen vorgesehen sind.

Figur 2 zeigt einen waagerechten Querschnitt durch die Auflagerungsvorrichtungen nach Figur 1.

Figur 3 zeigt eine erste Ausführungsvariante einer Auflagerungsvorrichtung.

Figur 4 zeigt eine zweite Ausführungsvariante einer Auflagerungsvorrichtung.

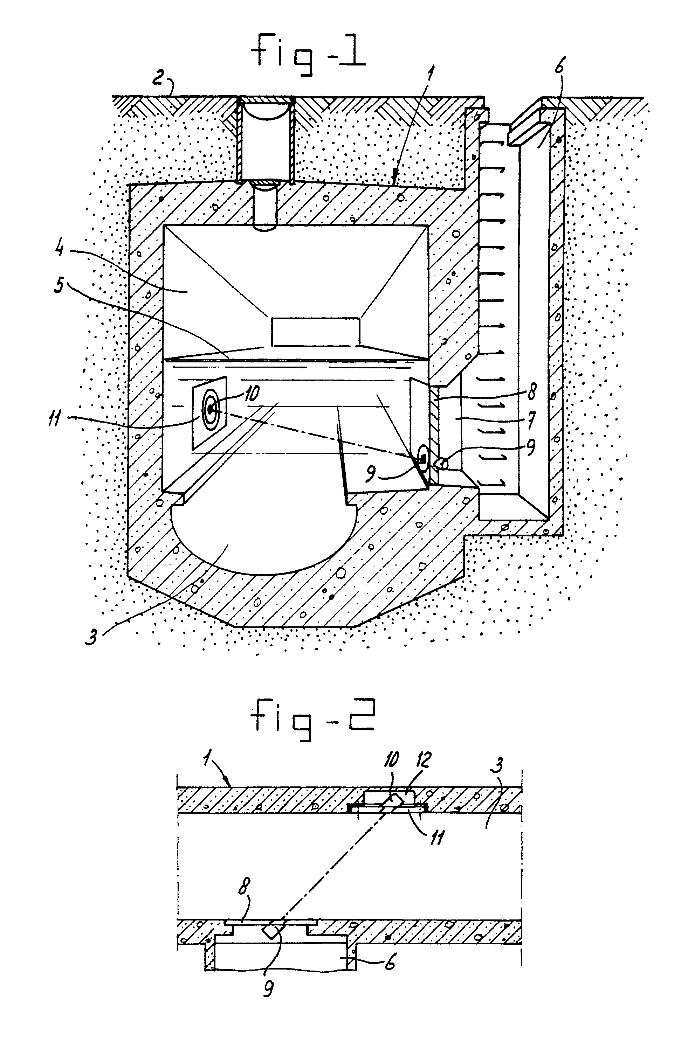

Der in Figur 1 dargestellte Kanal 1 ist in gewissem Abstand unter der Oberfläche 2 angebracht. Dieser Kanal 1 ist vollständig aus Beton gefertigt und weist einen Teil 3 auf, der zur Ableitung verhältnismäßig geringer Mengen Flüssigkeit wie Kanalisations- und Regenwasser, und einen Teil 4, der zur Aufnahme größerer abzuleitender Flüssigkeitsmengen vorgesehen ist. In dem dargestellten Beispiel ist der Kanal 1 bis zum Flüssigkeitsniveau 5 gefüllt.

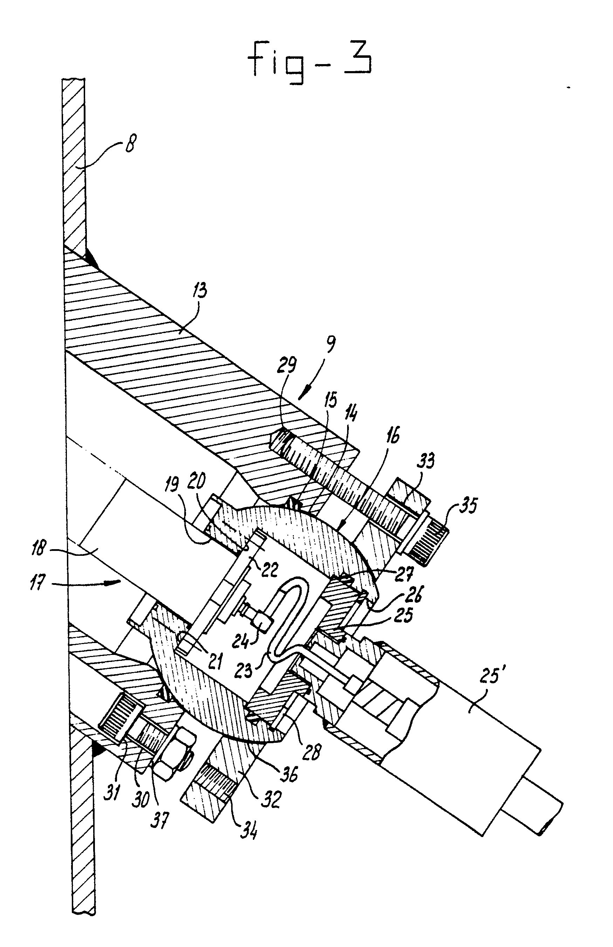

Weiter ist ein Zugangsschacht 6 dargestellt, der zur Zugangsöffnung 7 des Kanals hin verläuft. Diese Zugangsöffnung ist mittels einer Platte 8 abgeschlossen. In dieser Platte 8 ist eine Auflagerungsvorrichtung 9 für eine akustische Halterung vorgesehen, wie auch in Figur 2 dargestellt. Dort ist zu erkennen, daß die Auflagerungsvorrichtung 9 schräg verläuft, und einer entsprechenden Auflagerungsvorrichtung 10 für einen in einer Platte 11 angebrachten Sensor gegenüber ausgerichtet ist. Die Platte 11 schließt die Nische 12, in der die Auflagerungsvorrichtung 10 verläuft, wasserdicht ab. Mit einer solchen Anlage kann die Geschwindigkeit der Flüssigkeit, durch die die akustischen Signale verlaufen, auf Grund der Geschwindigkeitsdifferenz zwischen dem hin- und zurückgeschickten Schallsignal ermittelt werden.

Die in dieser Weise erfolgende Messung der Strömungsgeschwindigkeit ist an sich bekannt. Nachdem Störeinflüsse, wie der viereckige Querschnitt des Kanals usw. bereinigt worden sind, beispielsweise mittels eines Computerprogramms, kann aus der Geschwindigkeitsdifferenz zwischen den hin- und zurückgeschickten Schallsignalen die Strömungsgeschwindigkeit ziemlich genau errechnet werden.

Für eine korrekte Funktion eines solchen Meßsystems ist es von großer Bedeutung, daß die in den Auflagerungsvorrichtungen 9 und 10 untergebrachten akustischen Sensoren gegenseitig genauestens ausgerichtet sind, und auch einen genau bestimmten gegenseitigen Abstand haben. Angesichts der ziemlich großen Dimensionen des Kanals und im Hinblick auf die Ungenauigkeiten, die sich eben unvermeidlich in den Abmessungen des Betonkanals ergeben, läßt sich das jedoch nicht einfach realisieren.

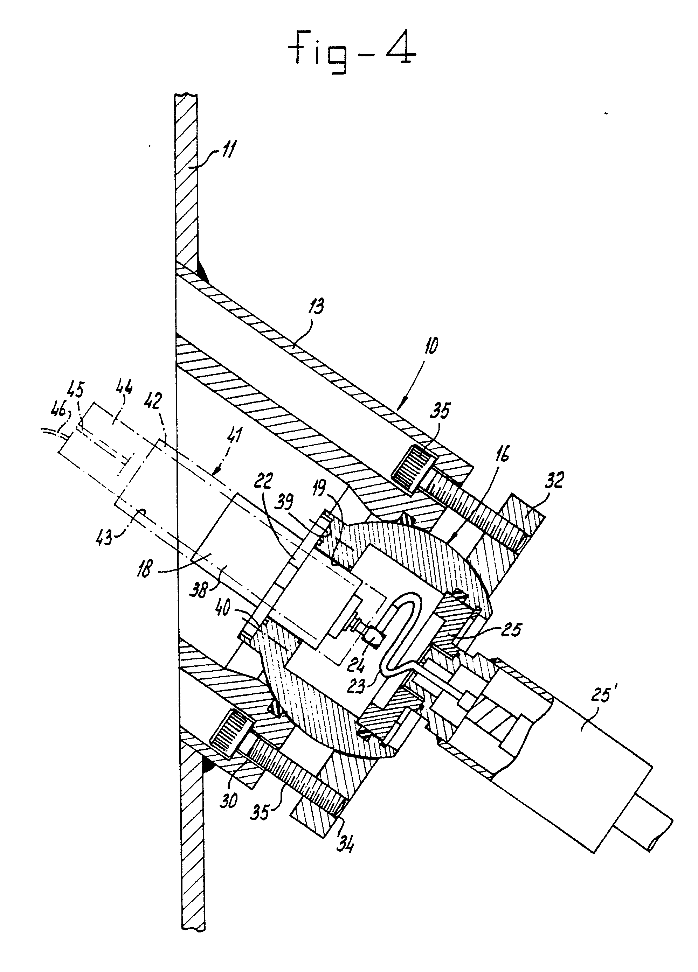

Um trotzdem die gewünschte Genauigkeit zu realisieren, sind die erfindungsgemäßen Auflagerungsvorrichtungen 9 und 10 in besonderer Weise ausgeführt. In Figur 3 ist dabei die Ausführungsvariante 9 der Auflagerungsvorrichtung dargestellt, in Figur 4 die Ausführungsvariante 10.

Mit Bezugnahme auf Figur 3 ist zu sehen, daß die Auflagerungsvorrichtung 9 aus einem äußeren zylindrischen Rohr 13 besteht, dessen zu der zu messenden Flüssigkeit hingewandtes Ende schräg gegenüber deren Achslinie hin verläuft. Am Umfang dieses schrägen Querschnitts ist die Befestigungsplatte 8 festgeschweißt. Am anderen Ende des Gehäuses 13 ist ein sich nach außen hin gemäß einer Kugeloberfläche erweiternder Teil 14 vorgesehen, in den eine O-Ring-Dichtung 15 aufgenommen ist. In diesen kugelflachenförmigen Teil 14 ist das Aufnahme-Organ 16 aufgenommen, das äußerlich eine entsprechende Kugelform hat. Es wird klar sein, daß das AufnahmeOrgan dadurch eine Drehbewegung um alle drei seine Drehlinien durchführen kann. Die kugelförmige Flache des Aufnahme- Organs 16 geht dabei so weit weiter, daß Verdrehungen von 15° um die Drehlinien möglich sind, die quer zur Achslinie des Gehäuses 13 verlaufen.

In das Aufnahme-Organ 16 ist die Halterung 17 für den Sensor aufgenommen. In dieser Halterung befindet sich der Sensor (nicht sichtbar), dessen Sensorfläche dem zu messenden Medium zugewandt ist. Halterung 17 besitzt einen Körper 18, der zylindrisch und genau zentrierbar in dem inneren Hohlraum 19 des Aufnahme-Organs 16 ist. Dieser Hohlraum 19 mündet auf die Anschlagsfläche 20, an der die Gegenfläche 21 eines an dem Körper 18 befestigten Flansches 22 befestigt werden kann. Somit kann die Halterung 11 von der dem Medium abgewandten Seite des Aufnahme-Organs 16 aus darin hineingesetzt und befestigt werden.

Als nächster Schritt kann das Signalkabel 23 an das aus der Halterung 17 heraussteckende Anschlußende 24 des Meßsensors angeschlossen werden. Dieses Signalkabel steckt aus einer Abschlußplatte 25 heraus, an der ein Anschlußstück 25' für das Kabel 23 befestigt ist. In dem Anschlußstück 25' ist das Kabel in bekannter Weise dichtend eingegossen.

Nach dem Anschließen des Kabels 23 wird die Dichtungsplatte 25 in eine entsprechende Aussparung 26 des Aufnahme-Organs 16 gepreßt, in der Weise, daß sie zusammen mit dem O-Ring 27 eine wasserdichte Dichtung bildet. Die Abschlußplatte 25 wird daraufhin mit dem Seeger-Ring 28 gesichert. Wie weiter dargestellt, hat das Gehäuse eine Reihe mit Gewinde versehener Löcher 29, beispielsweise insgesamt 3. Weiter hat das Gehäuse eine Reihe durchgehender, nicht mit Gewinde versehener Löcher 30, die eine Auflegefläche 31 für eine Innensechskantschraube bilden. Die Löcher 29 sind um 120° gegenüber einander verdreht auf dem Umfang des Gehäuses 13 angebracht, wobei jeweils zwischen zwei Löchern 29 ein Loch 30 sich befindet. Weiter hat der Andrückring 32 eine entsprechende Anzahl von glatten Löchern 33 und mit Gewinde versehenen Löchern 34. Diese sind in entsprechender Weise verteilt auf den Umfang des Andrückrings 32 angebracht. In der in Figur 3 abgebildeten Variante ist nun der Andrückring 32 mittels Schrauben 35, deren Kopf auf dem Ring ruht, und deren Schaft in das Loch 29 eingeschraubt ist, an dem Gehäuse 13 befestigt. Indem die Schrauben festgezogen werden, wird die gemäß dem Aufnahme-Organ kugelförmige Fläche 36 des Rings fest angedrückt, wobei auch das Aufnahme-Organ 16 daraufhin in den kugelflächenförmigen Teil 14 des Gehäuses 13 angedrückt wird. Auf diese Weise wird eine zuverlässige Sperrung des Aufnahme-Organs 16 in der gewünschte Position gewährleistet. Schließlich müssen die Löcher 30 gedichtet werden, was in dem Beispiel mittels Hilfsschrauben erreicht ist, mit denen ein Dichtungsring 37 auf das Gehäuse gedrückt wird.

Die Festhalte-Vorrichtung nach Figur 3 ist also vollständig von der dem Medium abgewandten Seite des Gehäuses 13 aus zu bedienen. Das bedeutet, daß, in den Figuren 1 und 2, eine solche Festhalte-Vorrichtung dazu geeignet ist, in dem Schacht 9 angebracht zu werden, wo sie auf der dem Medium abgewandten Seite erreichbar ist.

In bezug auf die Auflagerungsvorrichtung 10 aber, die in die Nische 12 des Kanals aufgenommen ist, ist es notwendig, daß diese vollständig von dem inneren Raum des Kanals 1 aus bedient und eingestellt werden kann. Dies ist bei der in Figur 4 gezeigten Variante möglich. Nach dieser Variante wird eine Halterung 38 angewandt, deren Körper 18 bis über den Befestigungsflansch 22 hinaus weitergeht. Dieser Befestigungsflansch 22 wird mit der dem zu messenden Medium abgewandten Gegenfläche 39 an der Anschlagsfläche 40 des Aufnahme-Organs 16 angebracht und dort befestigt. Dabei ist auch diese Halterung 38 sicher in dem Hohlraum 19 in dem Aufnahme-Organ 16 zentriert.

Selbstverständlich muß bei dieser Ausführung die Dichtungsplatte 25 zusammen mit dem Anschlußstück 25' für das Kabel 23 vorher installiert sein, so daß das Kabel 23 zum Einsetzen der Halterung 38 angeschlossen werden kann. Auch der Andrückring 32 kann von der dem Medium zugewandten Seite aus festgesetzt werden, indem nun Schrauben 35 von der Seite aus in die Löcher 30 in dem Gehäuse eingesetzt werden. Bei der in Figur 4 dargestellten Variante sind dabei als Beispiel vier regelmäßig auf den Umfang des Gehäuses verteilte Löcher 30 vorgesehen. Der Kopf jeder Schraube 35 liegt nun an der Fläche 31 der Löcher 30 an, während deren Schaft in die mit Gewinde versehenen Löcher 34 des Auflagerringes eingeschraubt ist. Mit einem Innensechskantschlüssel können die Schrauben festgezogen werden, wodurch das Aufnahme-Organ 16 mit der Halterung 38 gesperrt wird. Zwischen dem Kopf jeder Schraube 35 und der Fläche 31 ist ein flexibler Dichtungsring 47 vorgesehen.

Ein wichtiger Aspekt der Erfindung ist weiters, daß es in einfacher Weise möglich ist, das Aufnahme-Organ auszurichten, bevor der Sensor eingesetzt wird. Dazu ist mit unterbrochenen Linien in Figur 4 ein Richtmittel 41 schematisch dargestellt. Dieses Richtmittel 41 enthält ein Hilfsstück 42, das in den Hohlraum 19 in dem Aufnahme-Organ eingesetzt wird, statt der Halterung 38. Das Hilfsstück 42 ist mit einem inneren zylindrischen Hohlraum 43 versehen, in dem genau schließend eine Laserquelle 44 zentriert werden kann. Auf der Endfläche der Laserquelle 44 befindet sich eine Austritt-Öffnung 45, aus der ein Bündel Laserlicht abgegeben werden kann. Mit 46 ist schematisch das Versorgungskabel für die Laserquelle dargestellt. Indem das Hilfsstück 43 mit der Laserquelle 44 in der gewünschten Weise manipuliert wird, kann das Aufnahme-Organ 16 in der korrekten Weise der gegenübergelegenen Auflagerungsvorrichtung gegenüber ausgerichtet werden, wie beispielsweise durch die unterbrochenen Linien in Figur 1 wiedergegeben ist. Nachdem das Aufnahme-Organ in die richtige Position gebracht worden ist, kann durch Festziehen der Schrauben 35 das Aufnahme-Organ in der Position gesperrt werden. Es wird darauf hingewiesen, daß auch das Einsetzen des Hilfsstücks 42 und der Laserquelle 44 von der dem Medium zugewandten Seite der Auflagerungsvorrichtung erfolgen kann, so daß damit die Auflagerungsvorrichtung 10 in der gewünschten Weise ausgerichtet werden kann.

Die Ausführungsvariante nach Figur 3 kann, falls die Abschlußplatte 25 und das Anschlußstück 25' für das Kabel noch nicht installiert sind, das Hilfsstück 42 selbstverständlich auch auf der dem Medium abgewandten Seite in das Aufnahme-Organ 16 gesteckt werden. Die Austritt-Öffnung 45 für das Bündel Laserlicht befindet sich dann auf der dem Medium zugewandten Seite der Laserquelle, während das Versorgungskabel 46 sich auf der gegenübergelegenen Seite befindet. Mit einer so angebrachten Laserquelle kann auch diese Auflagerungsvorrichtung 9 in der gewünschten Weise ausgerichtet werden.

## Ansprüche

1. Auflagerungsvorrichtung für einen richtungsempfindlichen Sensor, versehen mit einem fest aufstellbaren Gehäuse, dadurch gekennzeichnet, daß der Sensor um wenigstens zwei gegenseitig senkrechte Drehlinien drehbar ist, die im wesentlichen quer zu der Richtung verlaufen, in der der Sensor empfindlich ist, und daß ein Sperrmittel dazu vorgesehen ist, um den Sensor in einer gewünschten Drehposition zu sperren.

2. Auflagerungsvorrichtung nach Anspruch 1, wobei das Gehäuse mit einem durchgehenden Hohlraum versehen ist, dadurch gekennzeichnet, daß ein Ende des Hohlraums nach einem Teil einer Kugelfläche sich erweiternd verläuft, und daß ein Aufnahme-Organ vorgesehen ist, das einen äußeren, entsprechend einer gleichen Kugelfläche verlaufenden Teil aufweist, wobei beide kugelflächenförmige Teile ineinander passend verdrehbar miteinander zusammenwirken.

3. Auflagerungsvorrichtung nach Anspruch 2, dadurch gekennzeichnet, daß das Sperrmittel ein Andrückorgan ist, mit dem die Kugelfläche aufeinander zu gedrängt werden können, in der Weise, daß sie durch gegenseitige Reibung gegenseitig sperrbar sind.

4. Auflagerungsvorrichtung nach Anspruch 2 oder 3, dadurch gekennzeichnet, daß das Aufnahme-Organ eine durchgehende zylindrische Bohrung aufweist, in der eine äußerlich entsprechende zylindrische Halterung für den Sensor zentriert werden kann.

5. Auflagerungsvorrichtung nach Anspruch 4, dadurch gekennzeichnet, daß die zylindrische Bohrung in dem Aufnahme-Organ an jedenfalls einem Ende auf eine Anschlagsfläche mündet, und daß die Halterung einen äußerlichen Flansch mit einer Gegenfläche aufweist, die gegen jene Anschlagsfläche angebracht werden kann.

6. Auflagerungsvorrichtung nach Anspruch 5, dadurch gekennzeichnet, daß die Gegenfläche zum auf ein zu messendes Medium oder einen zu messenden Gegenstand gerichteten Ende des Gehäuses hin gewendet ist, und die Anschlagsfläche diesem Ende abgewendet ist.

7. Auflagerungsvorrichtung nach Anspruch 5, dadurch gekennzeichnet, daß die Gegenfläche dem Ende des Gehäuses abgewandt ist, das auf ein zu messendes Medium oder einen zu messenden Gegenstand gerichtet ist, und die Anschlagsfläche diesem Ende zugewandt ist.

8. Auflagerungsvorrichtung nach Anspruch 5, dadurch gekennzeichnet, daß die zylindrische Bohrung auf beiden Seiten auf eine Anschlagsfläche mündet.

9. Auflagerungsvorrichtung nach Anspruch 5, 6, 7 oder 8, dadurch gekennzeichnet, daß sich jede Anschlagsfläche an dem Teil des Aufnahme-Organs befindet, der auf der dem zu messenden Medium oder Gegenstand am nächsten sich befindenden Seite des Aufnahme-Organs liegt.

10. Auflagerungsvorrichtung nach Anspruch 9, dadurch gekennzeichnet, daß an dem Teil des Aufnahme-Organs, der auf der von dem zu messenden Medium oder Gegenstand weitesten entfernten Seite sich befindet, sich ein Anschlußstück eines Signalkabels befindet.

11. Auflagerungsvorrichtung nach Anspruch 10, dadurch gekennzeichnet, daß das Anschlußstück eine zylindrische Befestigungsscheibe umfaßt, die in eine entsprechend gestaltete, mit einer Dichtung versehene Aussparung in dem Aufnahme-Organ eingesetzt werden kann.

12. Auflagerungsvorrichtung nach Anspruch 11, dadurch gekennzeichnet, daß das Kabel dichtend in dem Anschlußstück eingegossen ist, und durch das Anschlußstück hindurch steckt, in der Weise, daß das heraussteckende Ende an den Sensor angeschlossen werden kann.

13. Auflagerungsvorrichtung nach einem der Ansprüche 3 bis 12, dadurch gekennzeichnet, daß das Andrückorgan ein Ring ist, der mit einem innen gemäß der Kugelfläche des Aufnahme-Organs verlaufenden Teil zusammenwirkt, wobei das Aufnahmeorgan zwischen dem Gehäuse und diesem Ring festgehalten wird.

14. Auflagerungsvorrichtung nach Anspruch 13, dadurch gekennzeichnet, daß der Ring mittels Schrauben an dem Gehäuse befestigt werden kann, in der Weise, daß beim Festziehen der Schrauben das Aufnahme-Organ durch die dabei die zusammenwirkenden kugelflächenförmigen Oberflächen beaufschlagende Reibung festgeklemmt wird.

15. Auflagerungsvorrichtung nach Anspruch 14, dadurch gekennzeichnet, daß Gehäuse und Ring jedenfalls drei Paar, pro Paar auf eine Linie fluchtend zu bringende Löcher aufweist, wobei der Schraubenschaft in den Löchern im Gehäuse geschraubt werden kann und der Schraubenkopf an der dem Gehäuse abgewandten Seite des Rings angebracht werden kann.

16. Auflagerungsvorrichtung nach Anspruch 14 oder 15, dadurch gekennzeichnet, daß Gehäuse und Ring jedenfalls drei Paar, pro Paar auf eine Linie fluchtend zu bringende Löcher aufweist, wobei der Schraubenschaft in den Löchern im Ring geschraubt werden kann und der Schraubenkopf an der dem Ring abgewandten Auflagerungsfläche an dem Gehäuse angebracht werden kann.

17. Auflagerungsvorrichtung nach Anspruch 15 und 16, dadurch gekennzeichnet, daß Gehäuse und Ring in Umfangsrichtung abwechselnd je ein Loch mit glattem Rand und ein Loch mit Innengewinde haben.

18. Auflagerungsvorrichtung nach Anspruch 17, dadurch gekennzeichnet, daß Mittel vorgesehen sind, um die mit einer glatten Wand versehenen Löcher in dem Gehäuse zu dichten, für den Fall, daß in den mit Gewinde versehenen Löchern des Gehäuses Schrauben zur Befestigung des Rings geschraubt sind.

19. Auflagerungsvorrichtung nach einem der Ansprüche 2 bis 18, dadurch gekennzeichnet, daß in einem der kugelflächenförmigen Teile von Gehäuse und Aufnahme-Organ eine flexible Dichtung vorgesehen ist.

20. Auflagerungsvorrichtung nach einem der Ansprüche 2 bis 19, dadurch gekennzeichnet, daß das Gehäuse zylindrisch ist und auf der dem zu messenden Medium oder Gegenstand zugewandten Seite eine schräge verlaufende Stirnfläche hat.

21. Auflagerungsvorrichtung nach einem der Ansprüche 4 bis 20, dadurch gekennzeichnet, daß ein Hilfsstück vorgesehen ist, das in dem Aufnahme-Organ zentriert werden kann, welches Hilfsstück einen durchgehenden Hohlraum aufweist, in dem eine Laserquelle zentriert werden kann.

22. System zur Messung der Geschwindigkeit einer Flüssigkeitsströmung, versehen mit zwei gegenseitig ausgerichteten Auflagerungsvorrichtungen nach einem der vorigen Ansprüche, jeweils versehen mit einem akustischen Sensor.

23. System zur Messung der Flüssigkeitsströmung nach Anspruch 22 in einem Betonkanal, wobei die Auflagerungsvorrichtungen jeweils auf einer Seite einer Abdeckplatte befestigt sind, welche Abdeckplatte mit einem Loch für den Sensor versehen ist, zwei einander gegenüber gelegene Seiten des Kanals mit inneren Sparungen in Größe der entsprechenden Abdeckplatte versehen sind, welche Aussparungen in der Längsrichtung des Kanals gegenseitig versetzt sind, und wobei die Abdeckplatten dichtend auf den Rand der Sparungen festgesetzt werden können, in der Weise, daß sich jede Auflagerungsvorrichtung in einer inneren Aussparung erstreckt.

24. Verfahren zum Ausrichten des Systems nach Anspruch 22 oder 23, versehen mit zwei Auflagerungsvorrichtungen nach Anspruch 21, wobei eine Laserquelle oder eine akustische Quelle in der einen Auflagerungsvorrichtung zentriert wird, deren Aufnahme-Organ mittels des Lasersignals beziehungsweise des Schallsignals auf die andere Auflagerungsvorrichtung gezielt wird und daraufhin dieses Aufnahme-Organ in der betreffenden Position fixiert wird, wonach die Laser- oder Schallquelle entfernt wird und in der anderen Auflagerungsvorrichtung zentriert wird, deren Aufnahme-Organ mittels des Laser- oder Schallsignals auf die gegenüberliegende Auflagerungsvorrichtung gezielt wird und daraufhin dieses Aufnahme-Organ fixiert wird.

fig-1

fig-2

# fig-3

# Fig-4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1962649 (BRITISH COAL) <br> * Seite 10, Absatz 3; Figur 2 * <br> --- | 1-4, 22 | G01F1/66 |
| A | DE-A-2309605 (WESTINGHOUSE) <br> * Seite 8, Absatz 3 - Seite 11, Absatz 2; Figur 2 * <br> --- | 1, 4-8 | |
| A | EP-A-0036658 (FUJI) <br> * Seite 11, Zeilen 1 - 5; Figuren 4, 14 * <br> ----- | 22 | |
| | | | **RECHERCHIERTE SACHGEBIETE (Int. Cl.5)** <br><br> G01F |

Der vorliegende Recherchenbericht wurde für alle Patentansprüche erstellt

| Recherchenort | Abschlußdatum der Recherche | Prüfer |
|---|---|---|
| DEN HAAG | 15 OKTOBER 1990 | HEINSIUS R. |